# EUROPÄISCHE PATENTSCHRIFT

(11) **EP 2 514 649 B1**
(45) Veröffentlichungstag und Bekanntmachung des Hinweises auf die Patenterteilung: **19.11.2014**
(21) Anmeldenummer: 12163639.3
(22) Anmeldetag: 10.04.2012
(51) Int. Cl.: B60T 17/04

(54) **Kupplungskopf mit einem Filterelement**
Coupling head with a filter element
Tête d'accouplement dotée d'un élément filtrant

(30) Priorität: 18.04.2011 DE 102011002129
(43) Veröffentlichungstag der Anmeldung: 24.10.2012
(73) Patentinhaber: Haldex Brake Products GmbH, 69123 Heidelberg (DE)
(72) Erfinder: Sulzyc, Georg, 68305 Mannheim (DE)
(74) Vertreter: REHBERG HÜPPE + PARTNER

(56) Entgegenhaltungen:
- EP-A1- 2 281 700
- GB-A- 2 446 948

## Beschreibung

### TECHNISCHES GEBIET DER ERFINDUNG

Die Erfindung betrifft einen Kupplungskopf für ein Nutzfahrzeug mit einem von Druckluft durchströmten Filterelement, welches insbesondere als Filtereinsatz ausgebildet ist. Derartige Kupplungsköpfe finden zur pneumatischen Beaufschlagung einer Druckluftanlage eines Nutzfahrzeugs, insbesondere eines Glieds eines mehrgliedrigen Nutzfahrzeugs, Einsatz. Hierbei erfolgt beispielsweise über einen Kupplungskopf eine Zuführung von Druckluft zur Versorgung der Druckluftanlage mit Druckluft und/oder zur Übergabe eines Steuerdrucks, insbesondere für eine Bremsbetätigung. Häufig finden derartige Kupplungsköpfe Einsatz zur pneumatischen Kupplung eines Zugfahrzeugs mit einem Anhänger.

### STAND DER TECHNIK

CH 317732 offenbart einen einem Zugfahrzeug zugeordneten Kupplungskopf und einen einem Anhänger zugeordneten Kupplungskopf, die jeweils eine Muschelschalenform aufweisen mit einem Übergreifflansch, mittels dessen die beiden Kupplungsköpfe pneumatisch dicht miteinander verbunden werden können. Jeder Kupplungskopf verfügt über einen Dichtungsring, welche für eine Abdichtung der Kupplungsköpfe gegeneinander gepresst werden. In den zugwagenseitigen Kupplungskopf ist ein in Richtung des Anhängers sperrendes Rückschlagventil integriert, welches mit Montage der beiden Kupplungsköpfe über einen Nockentrieb automatisch bewegungsgesteuert in eine permanente Öffnungsstellung überführt wird. In dem anhängerseitigen Kupplungskopf ist ein von der Druckluft durchströmtes Filterelement in Form eines Siebkorbes integriert, welches dem Auffangen von Verunreinigungen dienen soll.

Die nicht gattungsgemäße Druckschrift DE 1 767 438 U betrifft einen Kupplungskopf für Eisenbahnfahrzeuge, in welchen ebenfalls ein Dichtungsring integriert ist. Der Dichtungsring besteht aus einem kreisringförmigen Körper aus Gummi oder gummiähnlichem Stoff. Der Dichtungsring verfügt über eine innen liegende Ringnut, in welche eine dünne Abdeckung eingesetzt ist, welche durch radial verlaufende Schlitze aufgeteilt ist in biegsame Sektoren in Form von Kreissegmenten mit gleichen Segmentwinkeln. Ohne an dem Kupplungskopf anliegenden Druck werden die Kreissegmente infolge ihrer Steifigkeit in einer ebenen Lage zueinander gehalten, womit der Kupplungskopf nach außen geschlossen ist. In gekuppeltem Zustand mit einer Beaufschlagung mit Druckluft sollen sich die Kreissegmente in Strömungsrichtung umbiegen, ohne einen relevanten Widerstand gegen die Strömung der Druckluft zu bilden.

DE-OS 2 037 008 offenbart Kupplungsköpfe für eine Zwei- oder Mehrleitungs-Druckluftbremsanlage für einen Anhängerbetrieb, wobei zwischen Zugfahrzeug und Anhänger für eine Vorratsleitung, eine Bremssteuerleitung und ggf. auch eine Hilfsbremsleitung lösbare Verbindungen über die Kupplungsköpfe erforderlich sind. Der zugfahrzeugseitige, der Vorratsleitung zugeordnete Kupplungskopf besitzt einen Dicht- und Steuerkolben, welcher über eine Feder ohne montierten anhängerseitigen Kupplungskopf in eine Sperrstellung beaufschlagt ist und bei Kopplung mit dem anhängerseitigen Kupplungskopf über eine Ringdichtung des anhängerseitigen Kupplungskopfs von einer Sperrstellung in eine Öffnungsstellung überführt wird, was entgegen der Beaufschlagung durch die Feder erfolgt. Der Dicht- und Steuerkolben besitzt eine Schräg- oder Nockenfläche, über welche dieser auf dem Weg von der Sperrstellung zu der Öffnungsstellung einen Stößel eines Absperrventils des zugfahrzeugseitigen Kupplungskopfes in die Öffnungsrichtung des Absperrventils betätigt. Die Dichtung des anhängerseitigen Kupplungskopfes ist als elastische Ringdichtung ausgebildet, die auf die Oberseite des Dicht-und Steuerkolbens des zugfahrzeugseitigen Kupplungskopfes aufgepresst wird, wenn die Kupplungsköpfe ineinander gedreht werden. Die gekuppelte Stellung der Kupplungsköpfe wird durch Bajonettglieder gesichert. Die Dichtung des anhängerseitigen Kupplungskopfes besitzt einen L-förmigen Halblängsschnitt, wobei ein Schenkel des L parallel zur Längsachse orientiert ist und eine Führungsfläche für den Druckluftstrom bildet, während der andere Schenkel des L sich radial nach außen erstreckt und formschlüssig von einem Gehäuse des anhängerseitigen Kupplungskopfes aufgenommen und gehalten ist. Der zugfahrzeugseitige, der Bremssteuerleitung zugeordnete Kupplungskopf besitzt grundsätzlich auch einen Dicht- und Steuerkolben, welcher zusammenwirkt mit der Dichtung mit L-förmigem Halblängsschnitt des anhängerseitigen Kupplungskopfes. Allerdings ist hier der Dicht- und Steuerkolben ergänzend mit einem Ventilsitz ausgestattet, der zusammen mit einem Ventilköper ein Absperrventil bildet. Der zugfahrzeugseitige Kupplungskopf besitzt einen Steuerkolben in einer Steuerkammer, die gekoppelt ist mit dem zugfahrzeugseitigen, der Vorratsleitung zugeordneten Kupplungskopf stromabwärts des Absperrventils dieses Kupplungskopfes. Der Steuerkolben ist als Differentialkolben ausgebildet, auf welchen sowohl der zugfahrzeugseitige Bremssteuerdruck als auch der Vorratsleitungsdruck stromabwärts des Absperrventils einwirkt. Wird die Verbindung der beiden der Vorratsleitung zugeordneten Kupplungsköpfe gelöst und bricht infolgedessen der Druck in der Steuerkammer ein, führt dies infolge einer Schließbewegung des Steuerkolbens zur Schließung des Sperrventils in dem zugfahrzeugseitigen, der Bremssteuerleitung zugeordneten Kupplungskopf, indem der Ventilkörper an den zugeordneten Ventilsitz angepresst wird. Die Kupplungsköpfe sind hier als "automatische Kupplungsköpfe" bezeichnet.

DE 199 31 162 B4 unterstreicht die Bedeutung des Einsatzes von Filterelementen in Kupplungsköpfen, um Druckluft-Bremsanlagen und Nebenverbraucher in Nutzfahrzeugen vor Verschmutzung zu schützen. Hierbei wird das Filterelement jeweils in den Kupplungskopf des Anhängers integriert. Die Kupplungsköpfe des Anhängers besitzen im Gegensatz zu denjenigen des Zugfahrzeugs kein Sperrventil bzw. Absperrventil, welches im entkuppelten Zustand ein Schließen der zugeordneten pneumatischen Leitung bewirkt. Das Filterelement befindet sich im allgemeinen in einem gesonderten Gehäuse, wobei Ausführungsformen bekannt sind, bei welchen ein topfförmig ausgebildeter Filtereinsatz gegen die Kraft einer verspannenden Druckfeder öffnet und eine Bypassverbindung freigibt. Die Freigabe dieser Bypassverbindung erfolgt erst, wenn das Filterelement hinreichend mit verunreinigenden Partikeln verstopft ist, so dass sich stromaufwärts des Filterelement ein erforderlicher Öffnungsdruck für die Bypassverbindung ergibt. Mit der Öffnung der Bypassverbindung wird in Kauf genommen, dass verunreinigte Druckluft zu dem Anhänger gelangen kann. DE 199 31 162 B4 offenbart einen Kupplungskopf mit einem Gehäuse, einer oberseitigen Klaue, einem Deckel und einer Führungsleiste, wobei Klaue und Führungsleiste der Verbindung und Führung des zugeordneten anderen Kupplungskopfes bei der Kupplungsherstellung und -lösung dienen. In den Kupplungskopf eingesetzt ist ein Federelement in Ausbildung als Filtereinsatz. Der Filtereinsatz ist ausgebildet mit einem käfigartigen Grundkörper, dessen Innenraum durch eine Innenbohrung einer Ringfläche in Strömungsrichtung der Druckluft frei zugänglich ist, während ein Austritt aus dem Innenraum in Strömungsrichtung ausschließlich durch Siebe aus einem aus Kunststoff bestehenden, feinmaschigen Filtermaterial möglich ist. Das Filtermaterial ist mit dem Käfig des Filtereinsatzes verklebt oder als Folge einer Wärmebehandlung verschmolzen. Die Ringfläche wird von einem Ring des Käfigs gebildet. An dem Ring des Käfigs stützt sich auf einer Seite eine erste Druckfeder ab, während an dem Ring auf der gegenüberliegenden Seite ein Anschlagring abgestützt ist, welcher durch eine zweite Druckfeder entgegengesetzt zur ersten Druckfeder beaufschlagt ist. Der Anschlagring ist ein Ventilkörper für ein Doppelventil, in dem dieser in einer Schließstellung eines ersten Ventils dicht an dem Ring anliegt sowie in einer Schließstellung des zweiten Ventils dicht an einem von dem Gehäuse des Kupplungskopfes gebildeten Ventilsitz anliegt, welcher radial außen liegend von dem Ring angeordnet ist. Ist der Filtereinsatz nicht infolge von Verschmutzung verstopft, sind beide Ventile geschlossen. Baut sich hingegen mit zunehmender Verstopfung des Filtereinsatzes stromaufwärts des Filtereinsatzes ein größerer Druck auf, kann dieser mit Überschreiten eines Öffnungsdrucks den Filtereinsatz mit dem Anschlagring gemeinsam unter zusätzlicher Beaufschlagung der zweiten Druckfeder von dem von dem Gehäuse gebildeten Ventilsitz abheben, womit druck- und verstopfungsabhängig ein Bypass geschaffen ist. Der Kupplungskopf ist aber auch für eine umgekehrte Strömungsrichtung geeignet, für welche ohne Verschmutzung des Filtereinsatzes ebenfalls die Druckluft durch den Filtereinsatz strömen muss. Baut sich hingegen auch für diese umgekehrte Strömungsrichtung bei Verstopfung des Filtereinsatzes ein Druckgefälle auf, kann auch für die umgekehrte Strömungsrichtung ein Bypass zur Wirkung gebracht werden, was in diesem Fall durch Öffnung des ersten Ventils erfolgt. Unter zusätzlicher Beaufschlagung der ersten Druckfeder wird der Filtereinsatz mit dem Ring von dem Anschlagring weg bewegt, womit zwischen dem Ring und dem Anschlagring ein Bypass in Form eines Übertrittsquerschnitts geschaffen wird. DE 199 31 162 B4 offenbart unterschiedliche Ausgestaltungsformen und Einbaumöglichkeiten für den Filtereinsatz und das Doppelventil. Die Montage des Kupplungskopfes erfordert das Einbringen der beiden Druckfedern, des Filtereinsatzes und des Anschlagrings in einen Innenraum des Gehäuses, der daran anschließend mit einem eingeschraubten Deckel mit zusätzlichem Dichtelement verschlossen werden muss. Alternativ wird anstelle des Einsatzes eines geschraubten Deckels ein anderweitiger Deckel mit schnelllöslichem Sicherungsring oder sonstigem Sicherungsdraht vorgeschlagen. Das Lösen des Deckels soll einen Zugriff in das Innere des Kupplungskopfes ermöglichen, so dass ein schneller Austausch des Filtereinsatzes nach dem Zusetzen desselben oder auch ein Austausch der Druckfedern ermöglicht werden soll.

Auch EP 2 281 700 A1 basiert auf dem Grundgedanken, bei stromaufwärtiger Druckerhöhung infolge einer erhöhten Drosselwirkung eines verstopften Filtereinsatzes ein Ventil für einen Bypass zu öffnen. In diesem Fall ist das Ventil gebildet mit einer Ventillippe der Dichtung, welche ohne Drosselwirkung infolge Verstopfung dicht an einem Begrenzungsring des Filtereinsatzes anliegt, aber sich mit Erhöhung des Staudrucks infolge der Drosselwirkung oberhalb eines Öffnungsdrucks elastisch verformt, so dass der Bypass freigegeben wird.

### AUFGABE DER ERFINDUNG

Der Erfindung liegt die Aufgabe zugrunde, einen Kupplungskopf für ein Nutzfahrzeug mit einem Filterelement, insbesondere einem Filtereinsatz, vorzuschlagen, der bei Beachtung des Herstellungs- und/oder Montageaufwands der Möglichkeit einer zumindest teilweisen Verstopfung des Filtereinsatzes infolge der Durchleitung verschmutzter Druckluft Rechnung trägt.

### LÖSUNG

Die Aufgabe der Erfindung wird erfindungsgemäß mit einem Kupplungskopf entsprechend den Merkmalen des unabhängigen Patentanspruchs 1 gelöst.

Weitere bevorzugte erfindungsgemäße Ausgestaltungen sind den abhängigen Patentansprüchen zu entnehmen.

### BESCHREIBUNG DER ERFINDUNG

Die vorliegende Erfindung basiert auf der Erkenntnis, dass der Fachmann gemäß dem eingangs genannten Stand der Technik von dem Vorurteil ausgeht, dass für den "normalen Betrieb" des Kupplungskopfes mit Filterelement, also nicht oder nicht ausreichend verstopftes Filterelement, tunlichst zu vermeiden ist, dass ein den Kupplungskopf umgehender Bypass vorhanden ist. Andererseits ist gemäß dem Stand der Technik ein Bypass erforderlich, der selektiv zur Wirkung gebracht werden muss, wenn eine Verstopfung oder ein teilweises Zusetzen des Filterelements auftritt und diese(s) nicht die Funktion der Druckluftanlage beeinträchtigt soll, indem eine zumindest teilweise Schließung oder erhöhte Drosselung des Übertrittsquerschnitts für die Druckluft im Kupplungskopf auftritt. Schlimmstenfalls könnte diese teilweise Schließung oder Drosselung beispielsweise zu einer ungenügenden Bremswirkung des Nutzfahrzeugs mit hierdurch bedingter Unfallgefahr führen, die Stilllegung des Fahrzeugs erfordern oder zwingend den Austausch oder die Reinigung des Filterelements erfordern.

Erfindungsgemäß ist erstmals erkannt worden, dass der das Filterelement umgehende Bypass permanent geöffnet sein kann. Erfindungsgemäß können dann die gemäß dem Stand der Technik erforderlichen zusätzlichen konstruktiven Maßnahmen zur Ermöglichung des druckgesteuerten Öffnens eines Bypasses entfallen. So sind insbesondere die aus dem eingangs genannten Stand der Technik bekannten Druckfedern zur Beaufschlagung eines Ventilelements in eine Schließrichtung, Ventilsitze und ähnliches entbehrlich. Auch eine Ausbildung der Dichtung gemäß EP 2 281 700 A1 mit einer elastischen Ventillippe kann u. U. ebenfalls entfallen, wodurch sich auch die Herstellung dieser Dichtung vereinfachen kann. Problematisch ist darüber hinaus bei den aus diesem Stand der Technik bekannten Ausführungsformen, dass die Ausstattung der Dichtung mit der Ventillippe eine Abweichung von genormten Dichtringen darstellt, wie diese in der ISO 1728 für Kupplungsköpfe vorgeschrieben ist. Ein weiteres Problem stellt eine Formbeständigkeit der Dichtlippe dar. Infolge einer Alterung oder von sonstigen Einflüssen kann sich das Materialverhalten im Laufe der Zeit verändern, wodurch sich eine schleichende Erhöhung oder Verringerung des Öffnungsdrucks für den Bypass ergeben kann. All diese Probleme können erfindungsgemäß beseitigt werden.

Grundsätzlich umfasst die Erfindung eine beliebige Gestaltung und Aufteilung der Druckluftströme einerseits durch das Filterelement und andererseits durch den permanent offenen Bypass, die auch von dem Grad des Ausmaßes der Verstopfung des Filterelements abhängig sein kann. Um lediglich ein nicht beschränkendes Beispiel zu nennen, kann grundsätzlich eine Drosselwirkung des nicht oder nicht hinreichend verstopften Filterelements kleiner sein als die Drosselwirkung des Bypasses, so dass ohne Überschreitung eines gewissen Verschmutzungsgrads des Filterelements ein bestimmten Anteil oder Großteil der Druckluft nicht über den Bypass das Filterelement umgeht, sondern das Filterelement durchströmt. Hierbei kann eine gewisse Weitergabe von Verschmutzung durch den Bypass unter Umständen in Kauf genommen werden.

Im Sinne der vorliegenden Erfindung soll unter einen "permanent offenen Bypass" auch ein Bypass subsumiert werden, in welchem möglicherweise auch eine (insbesondere gegenüber dem Filterelement reduzierte) Filterung erfolgt, so lange hier kein schaltbares Ventilelement den Bypass öffnet und schließt. Des Weiteren versteht sich, dass der erfindungsgemäße Bypass eine beliebige Strömungsgeometrie besitzen kann, wobei auch die Ausbildung des Bypasses mit mindestens einer Bypassöffnungen für einen Eintritt der Druckluft in den Bypass und/oder mit mindestens einem Bypasskanal möglich ist.

Eine weitere Ausgestaltung der Erfindung trägt ergänzend Sorge dafür, dass das Ausmaß der Verunreinigungen, welche über den Bypass das Filterelement umgehen könnten, in einem akzeptablen Maß gehalten wird. Für diese Ausgestaltung wird grundsätzlich die Druckluft über eine Führungsfläche in eine Führungsrichtung geführt, wobei die Führungsrichtung beispielsweise in Richtung des Filterelements gerichtet sein kann. Der Bypass besitzt (mindestens) eine Bypassöffnung für den Eintritt der Druckluft in den Bypass. Die Bypassöffnung ist so angeordnet, dass die Druckluft nicht unmittelbar in Führungsrichtung zu der Bypassöffnung gelangt, was bedeuten würde, dass der Druckluftstrom mit den Verunreinigungen zu der Bypassöffnung gelangen kann. Vielmehr ist die Bypassöffnung so angeordnet, dass die Druckluft von der Führungsfläche nur mit einer Umlenkung aus der Führungsrichtung zu der Bypassöffnung gelangen kann. Möglich ist, dass die Umlenkung durch entsprechende Leitelemente oder Führungsflächen erfolgt. Ebenfalls umfasst ist von der Erfindung eine zumindest teilweise Umlenkung durch pneumatische Kräfte, insbesondere die Strömungsverhältnisse, in dem Kupplungskopf. Möglich ist auch, dass die Druckluft nicht unmittelbar über die Strömung zu der Bypassöffnung gelangt, sondern eher in einem Bereich reduzierter Strömung infolge der Druckverhältnisse zu der Bypassöffnung gelangt. Die genannte Umlenkung hat zur Folge, dass in der Strömung enthaltene Verunreinigungen infolge ihrer Trägheit weniger oder nicht umgelenkt werden, so dass eine Trennung derart erfolgt, dass ursprünglich in Führungsrichtung orientierte Druckluft mit Verunreinigungen aufgeteilt wird in Verunreinigungen, die nicht zu der Bypassöffnung gelangen, und Druckluft, welche ohne Verunreinigungen oder mit verringertem Anteil von Verunreinigungen zu der Bypassöffnung gelangt. Es versteht sich, dass im Rahmen der vorliegenden Erfindung nicht eine vollständige Trennung der Druckluft einerseits und der Verunreinigungen andererseits erfolgen muss. Vielmehr kann durch die Umlenkung der Anteil der zu der Bypassöffnung gelangenden Verunreinigungen reduziert werden. Möglich ist auch, dass lediglich schwerere Verunreinigungen durch die Umlenkung von der Bypassöffnung ferngehalten werden, während leichtere oder kleinere Verunreinigungen, die unter Umständen den Betrieb der Druckluftanlage nicht beeinträchtigen, mit der Umlenkung der Bypassöffnung zugeführt werden können. Möglich ist, dass die Bypassöffnung in Strömungs- oder Führungsrichtung "abgedeckt" ist, so dass die Druckluft mit den Verunreinigungen nur "um die Ecke", nämlich um die Abdeckung herum, zu der Bypassöffnung gelangen kann.

Die Art der herbeigeführten Umlenkung ist beliebig. Für eine Ausgestaltung der Erfindung ist die Bypassöffnung im Bereich einer Hinterschneidung gebildet. Diese kann an beliebiger Stelle bspw. in den Strömungskanälen der Druckluft oder Einströmbereichen von Kammern angeordnet sein. Um lediglich einige nicht beschränkende Beispiele zu nennen, kann die Hinterschneidung (zumindest teilweise) mit der Dichtung ausgebildet sein, die für die Abdichtung der Kupplung der beiden zugeordneten Kupplungsköpfe verantwortlich ist, oder die Hinterschneidung ist (zumindest teilweise) mit einem Gehäuse des Kupplungskopfes ausgebildet, wobei auch Ausführungsformen möglich sind, bei welchen die Hinterschneidung gemeinsam mit der Dichtung und dem Gehäuse gebildet ist.

In weiterer Ausgestaltung der Erfindung ist der Bypass mit mindestens einem Bypasskanal und/oder mindestens einer Bypassöffnung gebildet. Hierbei können die Bypasskanäle und/oder Bypassöffnungen beliebig in den Strömungskanälen angeordnet sein. Diese können auch an unterschiedlichen Stellen entlang der Strömungsrichtung angeordnet sein. Für einen besonderen Vorschlag der Erfindung sind die Bypasskanäle oder Bypassöffnungen über den Umfang eines Leitungs- oder Strömungsquerschnitts verteilt, wobei die Verteilung gleichmäßig oder ungleichmäßig erfolgen kann. Einsatz finden können Bypassöffnungen und/oder Bypasskanäle, die alle gleiche oder unterschiedliche Querschnitts- und/oder Längsschnittgestaltungen besitzen können.

Für die Art und Strömungsführung bei der Umlenkung gibt es vielfältige Möglichkeiten. In einer besonderen Ausgestaltung der Erfindung sind die Strömungsverhältnisse in dem Kupplungskopf für zumindest teilweise verstopftes Filterelement derart vorgegeben, dass die Druckluft mit folgenden Teilströmungsbereichen zum Bypass gelangt und/oder diesen durchströmt:
- Von einer Führungsströmung im Bereich einer Führungsfläche wird zunächst die Strömung der Druckluft umgelenkt im Bereich einer Umlenkströmung, im Bereich welcher bereits Verunreinigungen ausgesondert werden können.
- Eine Erhöhung der Vermeidung des Durchtritts von Verunreinigungen durch den Bypass kann erfolgen, wenn nochmals eine Umlenkung, dann aber in eine andere Richtung, in einem Bereich einer Gegenumlenkströmung erfolgt.
- Zwischen dem Bereich der Umlenkströmung und dem Bereich der Gegenumlenkströmung ist ein Wendebereich angeordnet.

Grundsätzlich kann die Umlenkung entlang beliebiger kurvenförmiger Strömungsverläufe erfolgen, wobei auch Strömungskonturen für die Herbeiführung der Umlenkung mit Sprüngen, Kanten u. ä. ausgestattet sein können. Als unter Umständen besonders effektiv hinsichtlich der Fernhaltung von Verunreinigungen von einem Durchtritt durch den Bypass hat sich erwiesen, wenn die Druckluft für zumindest teilweise verstopftes Filterelement mit S-förmiger Strömung den Bypass durchströmt.

Gemäß einem weiteren Vorschlag der Erfindung muss die den Bypass durchströmende Druckluft einen Vorsprung, eine Kante oder einen Ansatz umströmen, welche(r) sich in das Filterelement erstreckt. Damit muss die Druckluft mit den darin enthaltenen Verunreinigungen bereits in das Innere des Filterelements, insbesondere des Filtereinsatzes, eintreten. Zu dem Bypass kann die Druckluft nur gelangen, wenn sie um den Vorsprung, die Kante oder den Ansatz wieder zurückströmt, was mit einer großen Richtungsänderung bis hin zu einer Umkehrung des Richtungssinns verbunden sein kann. Verunreinigungen sind hierbei bestrebt, die Strömungsrichtung in das Filterelement fortzusetzen und die vorgenannte Änderung der Strömungsrichtung nicht mitzumachen, so dass diese nicht oder in vermindertem Ausmaß zu dem Bypass gelangen.

Die Erfindung umfasst Ausführungsformen, bei welchen die die Strömung begrenzenden Konturen von den Strömungsverhältnissen unabhängig sind. Für einen weiteren Vorschlag der Erfindung erfolgt aber eine von den Strömungsbedingungen abhängige Beeinflussung der Konturen. Für diese Ausgestaltung ist ein elastisches Führungs- oder Durchlasselement vorgesehen. Das Führungs- oder Durchlasselement kann durch die Strömung der Druckluft, unter Umständen abhängig von einer Strömungsgeschwindigkeit, einem Volumenstrom oder einem Druck, elastisch verformt werden. In weitere Ausgestaltung der Erfindung verändert das Ausmaß der elastischen Verformung des Führungs- oder Durchlasselements das Ausmaß der Umlenkung der Druckluft auf dem Weg zu der mindestens einen Bypassöffnung des Bypasses.

Derartige Führungs- oder Durchlasselemente können in Form elastischer Kreissegmente gebildet sein, die beispielsweise entsprechend dem Stand der Technik DE 1 767 438 U in nicht durchströmten Zustand geschlossen sind, aber mit der Durchströmung eine Durchbiegung erfahren.

Im Fall eines Einsatzes von Führungs- oder Durchlasselementen in Form von elastischen Kreisringsegmenten bleibt innenliegend ein lichter Kreisquerschnitt frei, welcher unabhängig von einer elastischen Verformung der Kreisringsegmente durchströmt werden kann.

Möglich ist, dass das Führungs- oder Durchlasselement als separates Bauelement ausgebildet ist. Gemäß einem besonderen Vorschlag der Erfindung ist allerdings mindestens ein Führungs-oder Durchlasselement ein integraler Bestandteil der Dichtung, welche für die dichte Verbindung bei der Kupplung der beiden Kupplungsköpfe miteinander verantwortlich ist. Dieser Ausgestaltung liegt die Erkenntnis zugrunde, dass für beide dann vorhandenen Funktionen der Dichtung, nämlich einerseits die elastische Abdichtung der beiden Kupplungsköpfe und andererseits die elastische Verformbarkeit des Führungs- oder Durchlasselements die Elastizität der Dichtung, die aus einem einzigen Material oder aus einem Verbundmaterial bestehen kann, genutzt werden kann. Weiterhin verringert sich für diese Ausgestaltung der Erfindung die Bauteilvielfalt und damit der Herstellungs-, Bevorratungs- und Montageaufwand.

Während grundsätzlich die Ausgestaltung der Dichtung hinsichtlich der Form und Zusammensetzung beliebig ist, kann im Rahmen der Erfindung auch eine Dichtung nach ISO 1728 für Kupplungsköpfe verwendet werden.

Möglich ist, dass das Filterelement durch beliebige Maßnahmen lagegesichert ist, was insbesondere unter Vorspannung, mit einem gewissen Spiel oder mit einem festsitzenden Filterelements erfolgen kann. Eine besonders kompakte Ausgestaltung ergibt sich, wenn in einem erfindungsgemäßen Kupplungskopf das Filterelement durch die Dichtung lagegesichert ist. Damit übernimmt die Dichtung eine weitere Funktion. Als weiterer Vorteil wird die Lagesicherung des Filterelements beseitigt, wenn die Dichtung ausgebaut wird, beispielsweise im Zuge einer Wartung mit einem turnusgemäßen Austausch der Dichtung. Bei demontierter Dichtung kann dann u. U. ohne weitere Demontageschritte das Filterelement aus dem Kupplungskopf entnommen werden, womit dieses dann besonders einfach gereinigt werden kann oder durch ein neues Filterelement ersetzt werden kann.

Gemäß einer weiteren Ausgestaltung der Erfindung ist in dem Kupplungskopf (mindestens) ein Sammelraum für Verunreinigungen vorgesehen. Hierbei kann bereits das Filterelement oder der Filtereinsatz diesen Sammelraum bilden, indem die Druckluft an sich in Führungsrichtung zu dem Filtereinsatz geführt wird, Druckluft infolge der Umlenkung zu der Bypassöffnung gelangt, während sich Verunreinigungen im Inneren des Filtereinsatzes, welches damit den Sammelraum bildet, ablagern. Diese Ausführungsform kann denn Vorteil haben, dass mit dem Reinigen oder Austausch des Filterelements auch Verunreinigungen in dem hierdurch gebildeten Sammelraum beseitigt werden. Durchaus möglich ist allerdings auch, dass auf dem Weg zu dem Bypass oder im Bypass selbst zusätzliche Sammelräume mit entsprechenden Ausnehmungen, Nuten, Hinterschneidungen u. ä. gebildet sind, in welchen, beispielsweise in Folge von Umlenkungen, sich die Verunreinigungen ablagern können, so dass diese nicht weiter transportiert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es zwingend einer expliziten Verwendung des Adverbs "mindestens" bedarf. Wenn also beispielsweise von einem Bypasskanal die Rede ist, ist dies so zu verstehen, dass genau ein Bypasskanal, zwei Bypasskanäle oder mehr Bypasskanäle vorhanden sein können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einer erste Ausführungsform eines erfindungsgemäßen Kupplungskopfes in einem Vertikalschnitt.
- **Fig. 2**: zeigt ein Detail II von Fig. 1, in welchem die Durchströmung des erfindungsgemäßen Kupplungskopfes dargestellt ist.
- **Fig. 3 und 4**: zeigen weitere Ausführungsformen erfindungsgemäßer Kupplungsköpfe in einem Vertikalschnitt.
- **Fig. 5**: zeigt ein Detail V von Fig. 4, in welchem die Durchströmung des erfindungsgemäßen Kupplungskopfes dargestellt ist.
- **Fig. 6 und 7**: zeigen eine weitere Ausführungsform eines erfindungsgemäßen Kupplungskopfes in einem Vertikalschnitt.
- **Fig. 8**: zeigt einer Draufsicht auf eine Dichtung, welche eingesetzt ist in den Kupplungskopf gemäß Fig. 6 und 7.
- **Fig. 9**: zeigt eine weitere Ausführungsform eines erfindungsgemäßen Kupplungskopfes in einem Vertikalschnitt.
- **Fig. 10**: zeigt einer Draufsicht auf eine Dichtung, welche eingesetzt ist in den Kupplungskopf gemäß Fig. 9.
- **Fig. 11**: zeigt eine weitere Ausführungsform eines erfindungsgemäßen Kupplungskopfes in einem Vertikalschnitt.

### FIGURENBESCHREIBUNG

Der erfindungsgemäße Kupplungskopf 1 kann als Kupplungskopf für eine beliebige pneumatische Kupplung eingesetzt werden, insbesondere für eine Vorratsleitung oder eine Bremssteuerleitung eines Zugfahrzeugs oder eines Anhängers. Durchaus möglich ist, dass zusätzlich zu den im folgenden offenbarten Merkmalen weitere Bauelemente und technische Funktionen in den Kupplungskopf integriert sind, wie diese beispielweise für den eingangs genannten Stand der Technik erläutert worden sind, bspw. Sperrventile u. ä. Im Folgenden wird die Durchströmung des Kupplungskopfes in eine Richtung beschrieben. Möglich ist, dass dieses die einzige Richtung der Durchströmung des Kupplungskopfes im Betrieb darstellt. Durchaus möglich ist aber auch, dass der Kupplungskopf mit entgegengesetzter Durchströmungsrichtung einsetzbar ist, vgl. insbesondere auch die diesbezüglichen Ausführungen in DE 199 31 162 B4, wobei in diesem Fall die erfindungsgemäßen Maßnahmen mit der Umlenkung des Druckluftstroms lediglich in eine Strömungsrichtung oder aber vorzugsweise durch ergänzende weitere Maßnahmen in beide Strömungsrichtungen zur Wirkung kommen.

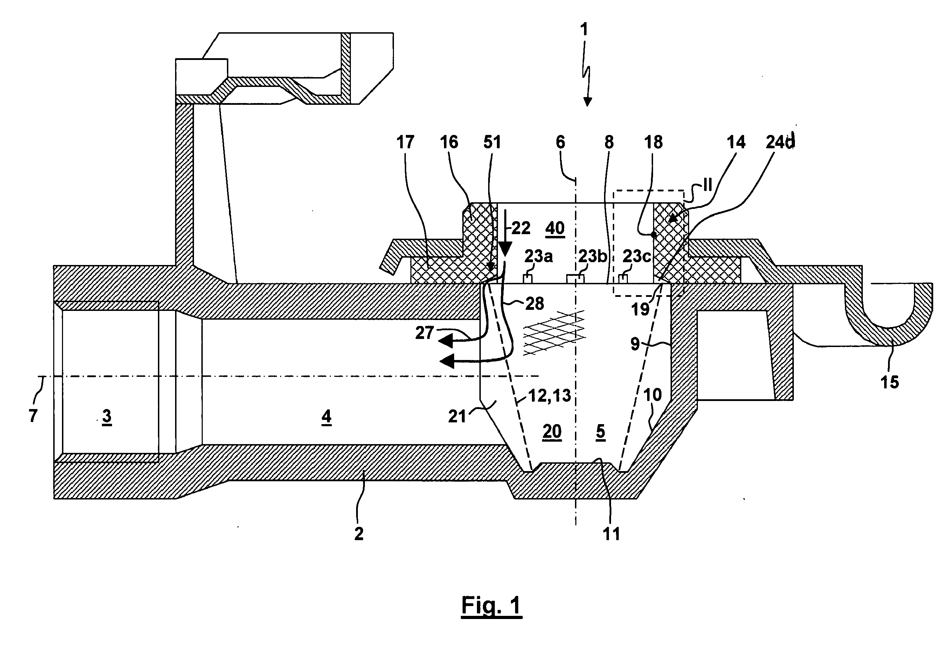

Der Kupplungskopf 1 gemäß **Fig. 1** besitzt ein Gehäuse 2, welches für das dargestellte Ausführungsbeispiel einstückig einen Anschlussbereich 3, einen geradlinigen Leitungsbereich 4 und eine Kammer 5 ausbildet, welche eine Längsachse 6 besitzt, die quer zur Längsachse 7 des Anschlussbereichs 3 und der Leitung 4 orientiert ist. Die Leitung 4 mündet seitlich in die Kammer 5, welche lediglich nach oben und in Richtung der Längsachse 6 eine Öffnung 8 besitzt. Vorzugsweise ist das Gehäuse als Gussteil ausgebildet.

Für das dargestellte Ausführungsbeispiel in Fig. 1 ist die Kammer 5 in der oberen Hälfte mit einer zylindrischen Mantelfläche 9 ausgebildet. Die Kammer 5 verjüngt sich geradlinig mit kegelstumpfförmiger Mantelfläche 10 zu einem Boden 11 der Kammer 5. In die Kammer 5 eingesetzt ist ein Filterelement 12, hier in Ausbildung als Filtereinsatz 13.

Der Filtereinsatz 13 kann beliebig ausgestaltet sein, beispielsweise auch entsprechend dem Filtereinsatz mit Käfig und Sieb gemäß DE 199 31 162 B4. Die Kontur des Filtereinsatzes 13 ist beispielsweise rotationssymmetrisch zu der Längsachse 6 ausgebildet. Für das dargestellte Ausführungsbeispiel besitzt der Filtereinsatz 13 eine kegelstumpfförmige Geometrie und ist auf dem Bodenbereich 11 abgestützt.

Von oben auf das Gehäuse 2 aufgepresst ist eine elastomere, elastische Dichtung 14, die eine pneumatisch dichte Verbindung zwischen der Dichtung 14 und dem Gehäuse 2 im Bereich der Öffnung 8 gewährleistet. Zu erkennen ist in Fig. 1 auch eine Führungsleiste 15, wie diese auch in DE 199 31 162 B4 beschrieben ist.

Die Dichtung 14 ist im Halbschnitt L-förmig ausgebildet mit einem parallel zur Längsachse 6 orientierten Schenkel 16 sowie einem quer zur Längsachse 6 orientierten, sich vom Schenkel 16 nach außen erstreckenden Schenkel 17. Der Schenkel 16 begrenzt eine zylindrische Innenwandung, welche eine Führungsfläche 18 für die einströmende Druckluft bildet. Die Führungsfläche 18 ist innenliegend von dem oberen Rand 19 des Filtereinsatzes 13 angeordnet (bei Blickrichtung radial zu der Längsachse 3). Vorzugsweise liegt die Dichtung 14 unter elastischer Vorspannung in Richtung der Längsachse 6 an dem Rand 19 des Filtereinsatzes 13 an, wodurch der Filtereinsatz 13, zumindest in Richtung der Längsachse 6, lagefixiert ist. Für das in Fig. 1 dargestellte Ausführungsbeispiel ist der Boden 11 mit einer Erhöhung ausgebildet, die formschlüssig in eine entsprechende Vertiefung des Filtereinsatzes 13 eintreten kann, womit auch eine seitliche Führung des Filtereinsatzes 13 erfolgt. In der Kammer 5 ist ein Innenraum 20 des Filtereinsatzes durch den Filtereinsatz getrennt von einem Übertrittsraum 21. Der Übertrittsraum 21 ist radial innenliegend von dem Filtereinsatz 13 und radial außenliegend von dem Gehäuse 2 mit den Mantelflächen 9, 10 begrenzt.

Druckluft strömt bei Führung durch die Führungsfläche 18 in eine Führungsrichtung 22 in den Innenraum 20 und durch den Filtereinsatz 13 zum Übertrittsraum 21, von welchem die Druckluft in die Leitung 4 gelangt.

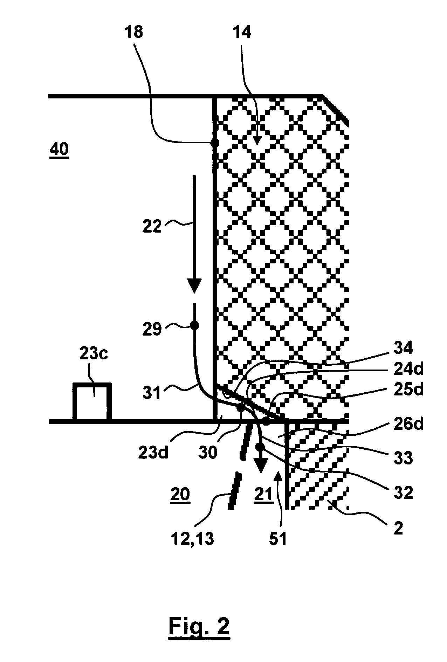

Im Bereich einer innenliegenden Ecke oder des Rands der Dichtung 14 besitzt die Dichtung mehrere über den Umfang verteilte Ausnehmungen 23, welche jeweils eine Hinterschneidung 24 der Führungsfläche 18 bilden (Fig. 2). Die Hinterschneidungen 24 führen zu Bypassöffnungen 25, die zwischen dem Rand 19 des Filtereinsatzes 13 und der Mantelfläche 9 bzw. der Dichtung 14 gebildet sind. Die Bypassöffnungen 25 münden in Bypasskanäle 26, die in den Übertrittsraum 21 münden oder mit diesem ausgebildet werden. In den Fig. sind die mehreren Ausnehmungen 23, Hinterschneidungen 24, Bypassöffnungen 25 und Bypasskanäle 26 teilweise durch Ergänzung der a, b, c, d unterschieden.

In Fig. 1 ist mit den Pfeilen 27, 28 dargestellt, dass die Druckluft von der Führungsrichtung 22 über zwei alternative Wege, nämlich
- einerseits durch den Filtereinsatz 13 und
- andererseits unter Umgehung des Filtereinsatzes 13 durch die Bypassöffnungen 25 und die Bypasskanäle 26
zu dem Übertrittsraum 21 und der Leitung 4 gelangen kann.

In **Fig. 2** ist die Umlenkung dargestellt, welche vorliegen muss, damit Druckluft von der Führungsrichtung 22 durch die Bypassöffnung 25 in den Bypasskanal 26 eintreten kann: Zunächst wird stromabwärts eines Strömungsbereichs 29 bis zu einem Wendebereich 30 in einem Umlenkbereich 31 die Strömung von der Längsachse 6 weg gelenkt, so dass sich eine Strömungskomponente radial nach außen vergrößert. Hingegen erfolgt stromabwärts des Wendebereiches 30 bis zu einem Strömungsbereich 32 eine Umlenkung in entgegengesetzte Richtung in einem Gegenumlenkbereich 33, indem sich somit die radial nach außen weisende Strömungskomponente verringert. Somit wird die Strömung "um die Ecke" geführt, was zur Folge hat, dass in der Druckluft enthaltene Verunreinigungen nicht dem in Fig. 2 skizzierten Strömungspfad der Druckluft mit dem Umlenkbereich 31 und dem Gegenumlenkbereich 33 folgen, sondern vielmehr in den Innenraum 20 des Filtereinsatzes 13 eintreten, wo sich diese ablagern können. Es versteht sich, dass der in Fig. 2 skizzierte Strömungspfad lediglich eine exemplarische Darstellung ist. Ohne veränderte konstruktive Ausgestaltung möglich sind anderweitige Strömungspfade, für welche beispielsweise die Druckluft zunächst in dem Innenraum des Filtereinsatzes 13 eintritt und dann erst die Umlenkung derart erfolgt, dass die Druckluft wieder aus dem Innenraum 20 austritt und über die Bypassöffnung 25 zu dem Bypasskanal 26 gelangt. Zu erkennen ist in Fig. 2, dass die Umlenkung in dem Umlenkbereich 31 nicht durch eine körperliche Leitkontur erfolgt, sondern vielmehr durch pneumatische Kräfte.

Für das in den Fig. 1 und 2 dargestellte Ausführungsbeispiel besitzen die Ausnehmungen 23 einen rechteckigen oder quadratischen Querschnitt, wobei die Höhe der Ausnehmungen radial nach außen abnimmt, so dass die Ausnehmung 23d in dem Detailschnitt gemäß Fig. 2 in der Art einer Fase 34 ausgebildet ist. Abseits der Ausnehmungen 23 liegt die Dichtung 16 an dem Rand 19 des Filtereinsatzes 13 unter Vorspannung an.

Für die folgenden Ausführungsbeispiele sind Bauelemente und ihre konstruktiven Merkmale mit gleichen Bezugszeichen gekennzeichnet wie in den Fig. 1 und 2 verwendet, sofern diese hinsichtlich ihrer Gestaltung und/oder Funktion zumindest teilweise mit den Bauelementen und Gestaltungsmerkmalen gemäß den Fig. 1 und 2 übereinstimmen oder vergleichbar sind.

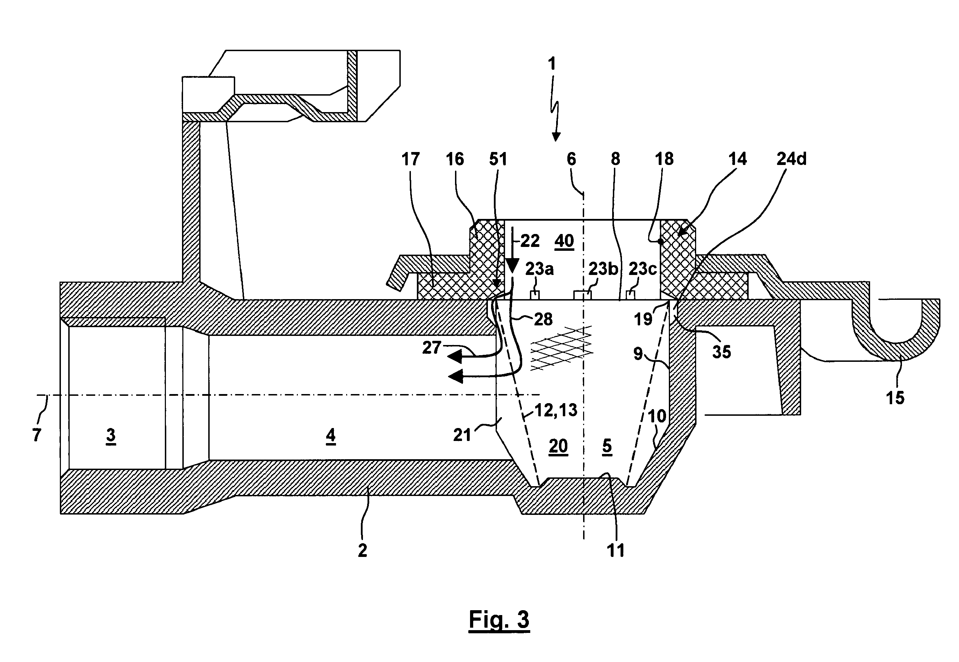

Die Ausführungsform gemäß **Fig. 3** entspricht im Wesentlichen der Ausführungsform gemäß Fig. 1 und 2. Allerdings besitzt hier das Gehäuse 2 im oberen Endbereich der Mantelfläche 9 mindestens eine Ausnehmung 35, wobei auch eine einzige Ausnehmung 35 durchgehend als eine Art Ringnut in die Mantelfläche 9 eingebracht sein kann. Alternativ können mehrere Ausnehmungen 35 vorgesehen sein an Umfangsorten, welche den Umfangsorten der Ausnehmungen 23 entsprechen. In diesem Fall sind die Hinterschneidungen 24 gemeinsam von den Ausnehmungen 23 der Dichtung 14 und der mindestens einen Ausnehmung 35 des Gehäuses gebildet, so dass die Ausnehmungen 35 den Bypasskanal 26 und die Bypassöffnung 25 bilden können. Wie in Fig. 3 dargestellt, kann in diesem Fall der Rand 19 des Filtereinsatzes 13 einen äußeren Durchmesser besitzen, welcher (mit einer Übergangspassung) dem Durchmesser der Mantelfläche 9 entsprechen kann, ohne dass dies zur Folge hat, dass die Druckluft nicht seitlich an dem Filtereinsatz 13 vorbeiströmen kann. Durchaus denkbar ist allerdings auch, dass eine Ausnehmung 25 in der Mantelfläche 9 vorgesehen ist, wenn die Abmessungen der Mantelfläche 9 einerseits und des Rands 19 des Filtereinsatzes 13 gemäß Fig. 1 gewählt sind, wodurch dann die Drosselwirkung der Bypassöffnung 25 und des Bypasskanals 26 reduziert werden kann, sofern dies gewünscht ist.

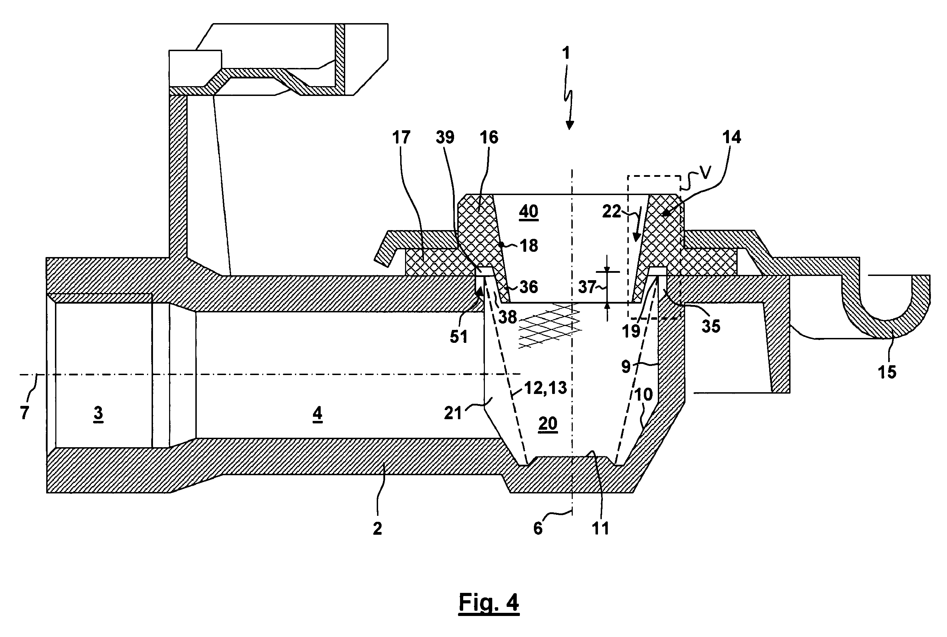

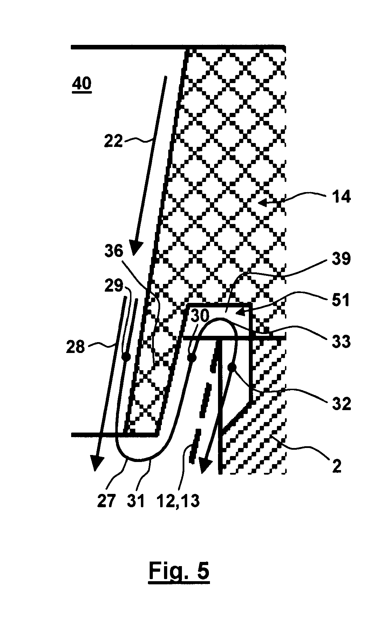

Gemäß dem in den **Fig. 4** **und** **5** dargestellten Ausführungsbeispiel ist das Gehäuse 2 des Kupplungskopfes 1 im Wesentlichen entsprechend Fig. 3 ausgebildet, wobei auch hier die Mantelfläche 9 mit einer beispielsweise umlaufenden Ausnehmung 35 ausgestattet ist. Hier ist aber die Dichtung 16 nicht mit Ausnehmungen 23 gemäß den vorangegangenen Figuren ausgestattet. Stattdessen besitzt die Dichtung 16 einen umlaufenden ringförmigen Ansatz 36, welcher sich mit einer Erstreckung 37 in den Innenraum 20 des Filtereinsatzes 13 erstreckt und die Führungsfläche 18 in den Innenraum 20 des Filtereinsatzes 13 verlängert. Radial außenliegend von dem Ansatz 36 ist zwischen Ansatz 36 und Filtereinsatz 13 ein Ringkanal 38 gebildet. Der Ringkanal 38 mündet in eine in den Schenkel 17 der Dichtung 14 eingebrachte Ringnut 39, über die der Ringkanal 38 pneumatisch mit der Ausnehmung 35 verbunden ist. Für das Ausführungsbeispiel gemäß Fig. 4 ist die Führungsfläche 18 kegel(stumpf)förmig ausgebildet mit Verjüngung in Richtung des Filtereinsatzes 13, wobei vorzugsweise der Öffnungswinkel der Führungsfläche 18 dem Öffnungswinkel des Filtereinsatzes 13 entspricht.

**Fig. 5** zeigt die Aufteilung der Strömung einerseits von Druckluft mit Verunreinigungen gemäß Pfeil 28 sowie der Druckluft mit vermindertem Anteil von Verunreinigungen gemäß Pfeil 27, wobei hier eine Umlenkung erfolgt von dem Strömungsbereich 29 über den Umlenkbereich 31 zum Wendebereich 30 sowie den Gegenumlenkbereich 33 zum Strömungsbereich 32. Vereinfacht gesagt kann die Umlenkung gemäß Fig. 5 in der Art eines "liegenden S" erfolgen.

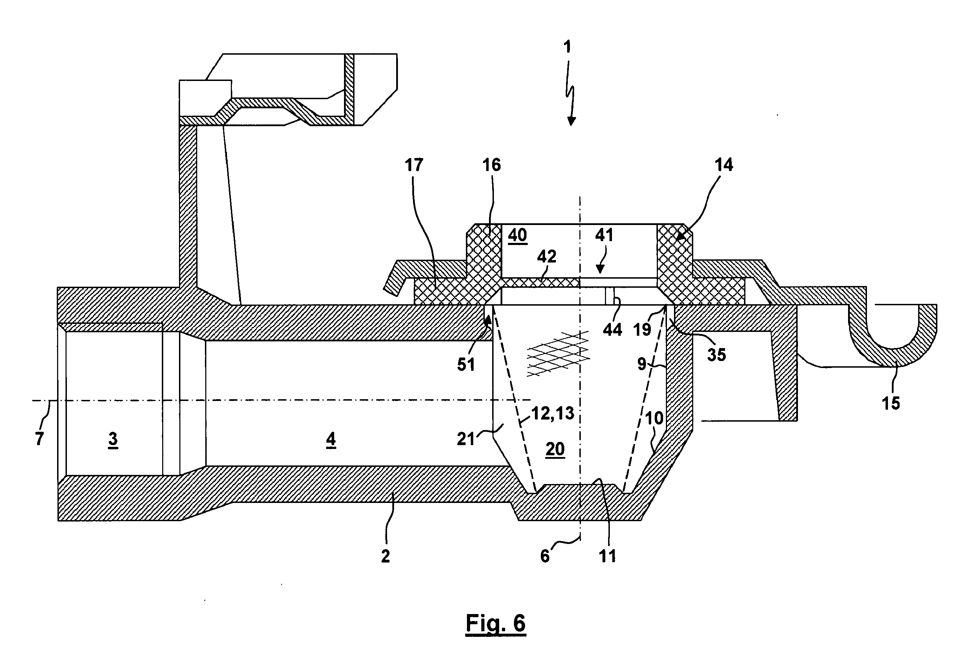

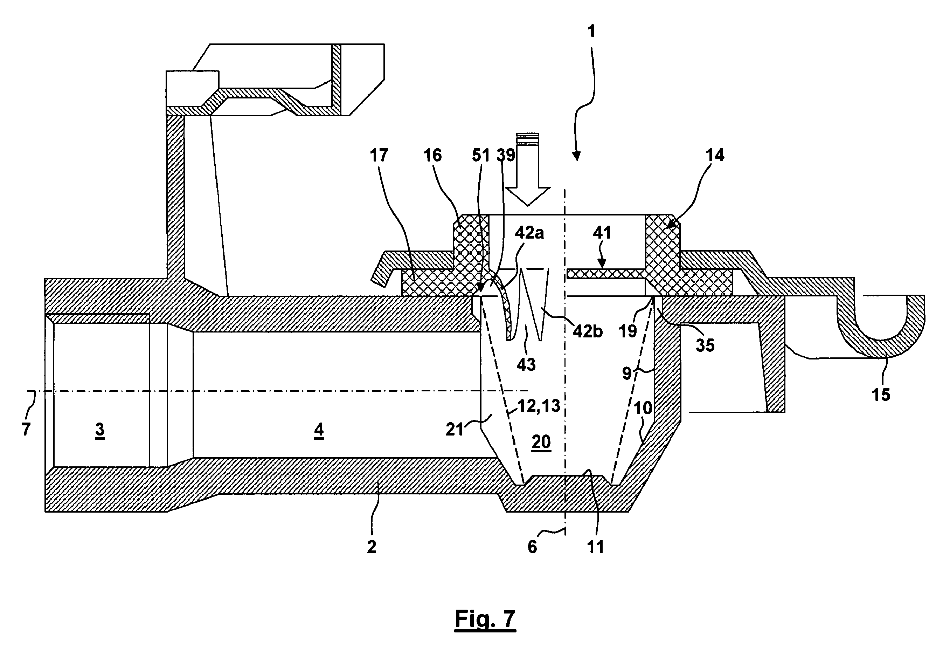

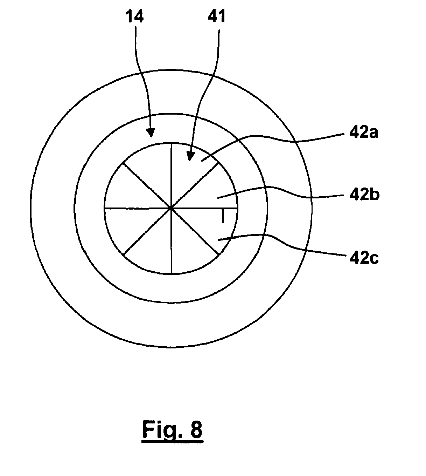

**Fig. 6** **und** **7** zeigen eine Ausführungsform, bei welcher das Gehäuse 2 entsprechend den Ausführungsformen gemäß Fig. 3 und 4 mit einer vorzugsweise ringförmigen Ausnehmung 35 ausgestattet ist. Abweichend ausgebildet ist hier die Dichtung 14: Wie in Fig. 8 zu erkennen ist, erstreckt sich quer zu dem von der Führungsfläche 18 begrenzten Einlasskanal 40 ein elastisches Führungs- oder Durchlasselement 41, welches integral von der Dichtung 14 ausgebildet ist. Das Führungs- oder Durchlasselement 41 ist mit hier acht Kreissegmenten 41 ausgebildet, welche im Bereich der radial zur Längsachse 6 orientierten seitlichen Begrenzungen möglichst dicht aneinander anliegen, so dass bei ebener Ausrichtung der Kreissegmente 42 gemäß Fig. 8, welche den drucklosen Zustand des Einlasskanals 40 entspricht, eine gewisse Schließfunktion, beispielsweise gegen den Eintritt von Verunreinigungen ohne weitere Druckluftströmung, bereitgestellt ist. Mit der Druckluftbeaufschlagung werden die Kreissegmente 42 in Strömungsrichtung durchgebogen, wie dies in Fig. 7 dargestellt ist, so dass Druckluft in den Innenraum 20 des Filtereinsatzes 13 eintreten kann. Je nach Durchbiegung der Kreissegmente 42 können diese mehr oder weniger kegelartig die Druckluftströmung in Richtung der Längsachse 6 bündeln. Andererseits treten mit zunehmender Durchbiegung die Kreissegmente 42 in den Innenraum 20 des Filtereinsatzes 13 ein, ähnlich dem Ansatz 36 gemäß dem in Fig. 4 dargestellten Ausführungsbeispiel, so dass die Strömung nur mit einer Umlenkung entsprechend Fig. 5 zu der Bypassöffnung 25 und dem Bypasskanal 26 gelangen kann, wobei allerdings die erforderliche Umlenkung abhängen kann von dem Ausmaß der Durchbiegung der Kreissegmente 42. Darüber hinaus ist möglich, dass sich, wie in Fig. 7 dargestellt, mit der Durchbiegung der Kreissegmente 42 zwischen benachbarten Kreissegmenten 42 Zwischenräume 43 bilden, durch welche die Druckluft hindurch mit einer veränderten Umlenkung zu der Bypassöffnung 25 und dem Bypasskanal 26 übertreten kann. Während die die Ringnut 39 in der Dichtung 14 gemäß Fig. 4 in erster Näherung einen rechteckigen Querschnitt besitzt, zeigt Fig. 7 einen Ringnut 39 mit dreieckigem Querschnitt, wobei die für die Umlenkung verantwortliche Ecke abgerundet ist, was sich automatisch durch die Biegelinie der Ringsegmente 42 ergeben kann. Möglich ist, dass die Dichtung 14 mit Rippen 44 ausgestattet ist, welche von oben auf den Rand 19 des Filtereinsatzes 13 angepresst werden zwecks Lagefixierung desselben. In Fig. 7 sind in der linken Halbebene die Kreissegmente 42 durchströmt und durchgebogen dargestellt, während diese in der rechten Halbebene ohne Durchströmung und Durchbiegung dargestellt sind.

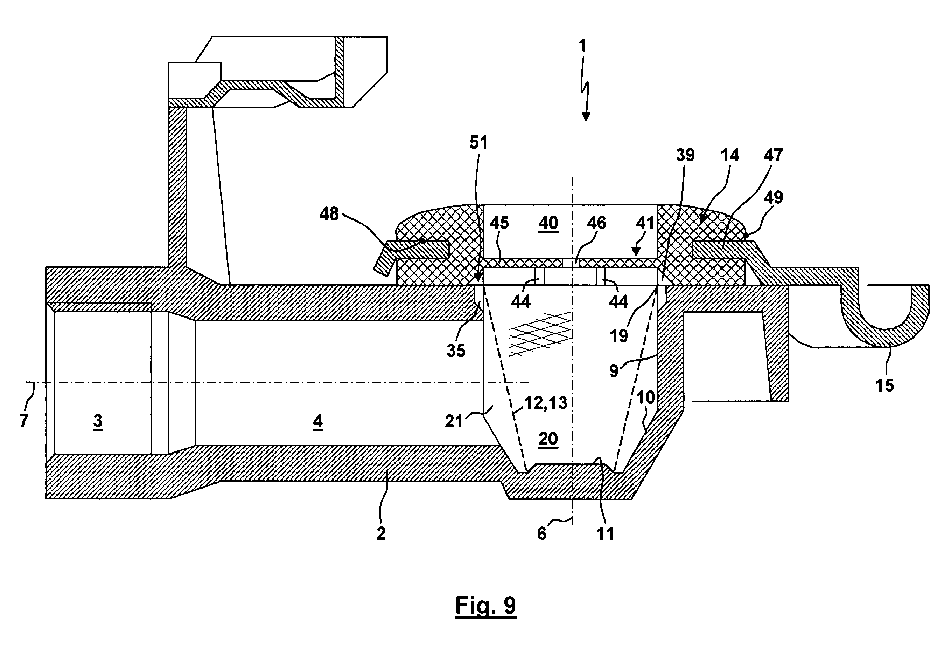

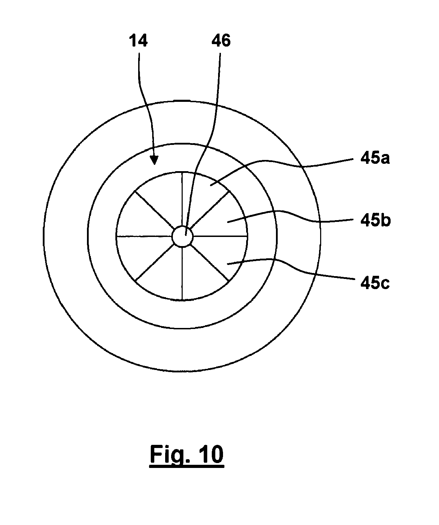

Bei dem in den **Fig. 9** **und** **10** dargestellten Ausführungsbeispiel ist die hier im Vordergrund stehende Funktion der Dichtung 14 entsprechend dem Ausführungsbeispiel gemäß Fig. 6 bis 8 ausgebildet, allerdings mit dem Unterschied, dass das Führungs- oder Durchlasselement 42 in diesem Fall mit Kreisringsegmenten 45 ausgebildet ist, die radial innenliegend auch ohne elastische Durchbiegung einen kreisförmigen Durchlassquerschnitt 46 begrenzen. Während für die vorangegangenen Ausführungsbeispiele die Führungsleiste 15 von oben auf den Schenkel 17 der Dichtung 14 aufgelegt oder aufgepresst wurde, ist für das Ausführungsbeispiel gemäß Fig. 9 ein kreisringförmiger Verbindungsbereich 47 in einer Ringnut 48 der Mantelfläche 49 der Dichtung 14 aufgenommen und gehalten. Dies stellt eine Form der Dichtung 14 und der Verbindung mit der Führungsleiste 15 dar, wie diese insbesondere in den USA Einsatz finden.

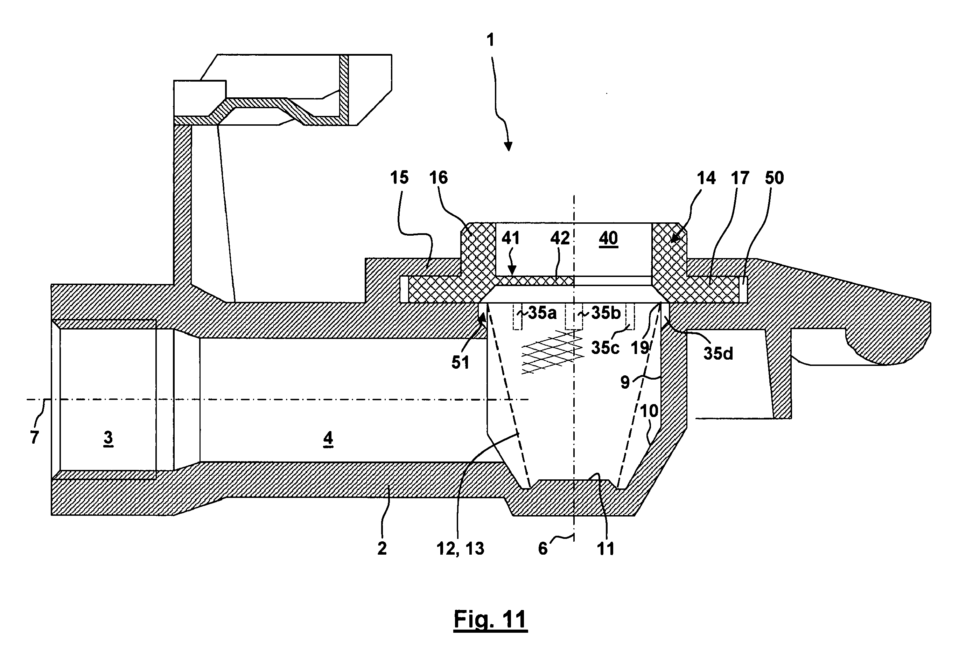

**Fig. 11** zeigt eine Ausführungsform, bei welcher die Führungsleiste 15 einstückig mit dem Gehäuse 2 ausgebildet ist. Zur Aufnahme der Dichtung 14 besitzt hier das Gehäuse 2 eine Hinterschneidung 50 in Form einer umlaufenden Nut, die beispielsweise spanabhebend gefertigt sein kann. Für die Montage wird vorzugsweise die Dichtung 14 unter elastischer Verformung mit dem Schenkel 17 in die Hinterschneidung 50 eingeführt. Des Weiteren ist in Fig. 11 zu erkennen, dass möglich ist, dass die Ausnehmung 35 des Gehäuses zwecks Bildung des Bypasses 51 nicht umlaufend ausgebildet sein muss. Vielmehr sind hier mehrere über den Umfang verteilte Ausnehmungen 35a, 35b, ... eingesetzt.

Vorzugsweise sind die Durchmesser des Filtereinsatzes 13 derart bemessen, dass bei einem regelmäßig stattfindenden Wechsel der Dichtung 14 der Filtereinsatz 13 lose in der Kammer 5 angeordnet ist und problemlos entnommen und gereinigt oder ausgetauscht werden kann. Ein derartiger Dichtungswechsel kann stattfinden, ohne dass weitere Bauteile des Kupplungskopfes 1 als die Führungsleiste 15 und/oder die Dichtung 14 beseitigt werden müssen.

Mit den Ausnehmungen 23, Hinterschneidungen 24, Fasen 34, Bypasskanälen 26, Bypassöffnungen 25, Ausnehmungen 35 und/oder einem Teilbereich des Übertrittsraums 21 ist ein Bypass 51 gebildet. Die Verunreinigungen der Druckluft können beliebig sein, beispielsweise in Form von Partikeln, Verschmutzungen, Tropfen oder als Nebel ausgebildet sein. Der Rand 19 des Filtereinsatzes 13 bildet ein Trennelement für die Aufteilung der Druckluftströme einerseits in Richtung des Filterelements 12 und andererseits durch den Bypass 51. Der Rand 19 begrenzt hierbei radial innenliegend die Bypassöffnung(en).

Es versteht sich, dass die vorliegende Erfindung auch Ausgestaltungsformen mit anderweitigen Umlenkungen der Druckluft zur Aussonderung der Verunreinigungen umfassen kann, wobei auch eine mehrfache Umlenkung hin- und her erfolgen kann, wobei auch eine labyrinthartige Führung eines Druckluftstroms erfolgen kann. Die Umlenkung zur Absonderung von Verunreinigungen kann hierbei stromaufwärts der Bypassöffnung erfolgen, also außerhalb des Bypasses selbst, und/oder innerhalb des Bypasses.

Für die dargestellten Ausführungsbeispiele ist der mindestens eine Bypass 51 oder der mindestens eine Bypasskanal 26 gebildet mit einer Ausnehmung oder Hinterschneidung 24 der Dichtung 14 und/oder des Gehäuses 2, während der Filtereinsatz 13 einen umlaufenden Rand 19 besitzt, der den Bypass 51 bzw. Bypasskanal 26 begrenzt. Es ist durchaus möglich, dass von dem Filterelement 12 oder dem Filtereinsatz 13 der mindestens eine Bypasskanal 26 oder mindestens ein Bypass 51 gebildet ist, ohne dass die Dichtung 14 und/oder das Gehäuse 2 eine Ausnehmung oder Hinterschneidung zu diesem Zweck besitzt. Um lediglich ein Beispiel zu nennen, können in dem Rand 19 des Filtereinsatzes 13 in axiale Richtung orientierte Vertiefungen zur Bildung des Bypasses 51 gebildet sein. Ebenfalls möglich ist, dass im oberen Endbereich des Filtereinsatzes 13 radiale Ausnehmungen, Bohrungen o. ä. vorgesehen sind.

### BEZUGSZEICHENLISTE

- 1: Kupplungskopf
- 2: Gehäuse
- 3: Anschlussbereich
- 4: Leitung
- 5: Kammer
- 6: Längsachse
- 7: Längsachse
- 8: Öffnung
- 9: Mantelfläche
- 10: Mantelfläche
- 11: Bodenbereich
- 12: Filterelement
- 13: Filtereinsatz
- 14: Dichtung
- 15: Führungsleiste
- 16: Schenkel
- 17: Schenkel
- 18: Führungsfläche
- 19: Rand
- 20: Innenraum
- 21: Übertrittsraum
- 22: Führungsrichtung
- 23: Ausnehmungen
- 24: Hinterschneidung
- 25: Bypassöffnung
- 26: Bypasskanal
- 27: Pfeil
- 28: Pfeil
- 29: Strömungsbereich
- 30: Wendebereich
- 31: Umlenkbereich
- 32: Strömungsbereich
- 33: Gegenumlenkbereich
- 34: Fase
- 35: Ausnehmung
- 36: Ansatz
- 37: Erstreckung
- 38: Ringkanal
- 39: Ringnut
- 40: Einlasskanal
- 41: Führungs- oder Durchlasselement
- 42: Kreissegment
- 43: Zwischenraum
- 44: Rippe
- 45: Kreisringsegment
- 46: Durchlassquerschnitt
- 47: Verbindungsbereich
- 48: Ringnut
- 49: Mantelfläche
- 50: Hinterschneidung
- 51: Bypass

## Patentansprüche

1. Kupplungskopf (1) für ein Nutzfahrzeug mit einem von Druckluft durchströmten Filterelement (12) und einem permanent offenen, das Filterelement (12) umgehenden Bypass (51).

2. Kupplungskopf (1) nach Anspruch 1, **dadurch gekennzeichnet, dass** eine Führungsfläche (18) die Druckluft in eine Führungsrichtung (22) in Richtung des Filterelements (12) führt und der Bypass (51) eine Bypassöffnung (25) besitzt, welche so angeordnet ist, dass die Druckluft von der Führungsfläche (18) nur mit einer Umlenkung aus der Führungsrichtung (22) zu der Bypassöffnung (25) gelangen kann.

3. Kupplungskopf (1) nach Anspruch 2, **dadurch gekennzeichnet, dass** die Bypassöffnung (25) im Bereich einer Hinterschneidung (24) angeordnet ist.

4. Kupplungskopf (1) nach Anspruch 3, **dadurch gekennzeichnet, dass** die Hinterschneidung (24) mit einer Dichtung (14) ausgebildet ist.

5. Kupplungskopf (1) nach Anspruch 3 oder 4, **dadurch gekennzeichnet, dass** die Hinterschneidung (24) mit einem Gehäuse (2) ausgebildet ist.

6. Kupplungskopf (1) nach einem der vorhergehenden Ansprüche, **dadurch gekennzeichnet, dass** der Bypass (51) mit einem Bypasskanal (26) oder mehreren Bypasskanälen (26) und/oder einer Bypassöffnung (25) oder mehreren Bypassöffnungen (25) gebildet ist.

7. Kupplungskopf (1) nach Anspruch 6, **dadurch gekennzeichnet, dass** Bypasskanäle (26) und/oder Bypassöffnungen (25) über den Umfang verteilt sind.

8. Kupplungskopf (1) nach Anspruch 6, **dadurch gekennzeichnet, dass** der Bypasskanal (26) und/oder die Bypassöffnung (25) über den Umfang umlaufend ausgebildet ist.

9. Kupplungskopf (1) nach Anspruch 8, **dadurch gekennzeichnet, dass** der umlaufende Bypasskanal (26) radial innenliegend von dem Filterelement (12) und/oder radial aussenliegend von einer Dichtung (14) und/oder einem Gehäuse (2) begrenzt ist.

10. Kupplungskopf (1) nach einem der vorhergehenden Ansprüche 6 bis 9, **dadurch gekennzeichnet, dass** im Bereich eines Trennelements eine Strömung der Druckluft in den mindestens einen Bypasskanal (26) von einer Strömung der Druckluft in Richtung des Filterelements (12) getrennt wird.

11. Kupplungskopf (1) nach Anspruch 10, **dadurch gekennzeichnet, dass** das Trennelement von einem Rand (12) des Filterelements (12) ausgebildet ist.

12. Kupplungskopf (1) nach einem der vorhergehenden Ansprüche, **dadurch gekennzeichnet, dass** für zumindest teilweise verstopftes Filterelement (12) die Strömungsverhältnisse derart vorgegeben sind, dass Druckluft von einer Strömung in Führungsrichtung (22) über einen Umlenkbereich (31), einen Wendebereich (30) und einem Gegenumlenkbereich (33) den Bypass (51) durchströmt.

13. Kupplungskopf (1) nach einem der vorhergehenden Ansprüche, **dadurch gekennzeichnet, dass** die Druckluft für zumindest teilweise verstopftes Filterelement (12) mit S-förmiger Strömung den Bypass (51) durchströmt.

14. Kupplungskopf (1) nach einem der vorhergehenden Ansprüche, **dadurch gekennzeichnet, dass** den Bypass (51) durchströmende Druckluft einen Vorsprung, eine Kante oder einen Ansatz (36) umströmt, welche oder welcher sich in das Filterelement (12) erstreckt.

15. Kupplungskopf (1) nach einem der vorhergehenden Ansprüche, **dadurch gekennzeichnet, dass** ein elastisches Führungs- oder Durchlasselement (41) vorgesehen ist, welches durch die Strömung der Druckluft elastisch verformt wird.

16. Kupplungskopf (1) nach Anspruch 15, **dadurch gekennzeichnet, dass** die erforderliche Umlenkung der Druckluft auf dem Weg zur Bypassöffnung (25) des Bypasses (51) von der elastischen Verformung des Führungs- oder Durchlasselements (41) abhängig ist.

17. Kupplungskopf (1) nach Anspruch 15 oder 16, **dadurch gekennzeichnet, dass** das Führungs- oder Durchlasselement (41) mit elastischen Kreissegmenten (42) oder Kreisringsegmenten (45) gebildet ist.

18. Kupplungskopf (1) nach einem der Ansprüche 15 bis 17, **dadurch gekennzeichnet, dass** das Führungs- oder Durchlasselement (41) als integraler Bestandteil einer oder der Dichtung (14) ausgebildet ist.

19. Kupplungskopf (1) nach einem der vorhergehenden Ansprüche, **dadurch gekennzeichnet, dass** eine oder die Dichtung (14) nach ISO 1728 für Kupplungsköpfe ausgebildet ist.

20. Kupplungskopf (1) nach einem der vorhergehenden Ansprüche, **dadurch gekennzeichnet, dass** das Filterelement (12)
a) durch die oder eine Dichtung (14) lagegesichert ist und
b) bei demontierter Dichtung (14) ohne weitere Demontageschritte aus dem Kupplungskopf (1) entnehmbar ist.

21. Kupplungskopf (1) nach einem der vorhergehenden Ansprüche, **dadurch gekennzeichnet, dass** ein Sammelraum für Verunreinigungen der Druckluft vorgesehen ist.

## Claims

1. Coupling head (1) for a commercial vehicle with a filter element (12) which is passed through by pressurised air and with a permanently open bypass (51) bypassing the filter element (12).

2. Coupling head (1) according to claim 1, **characterised in that** a guiding area (18) guides the pressurised air in a guiding direction (22) towards the filter element (12) and the bypass (51) has a bypass opening (25), which is placed in such a way that the pressurised air can only reach the bypass opening (25) from the guiding area (18) with a deflection from the guiding direction (22).

3. Coupling head (1) according to claim 2, **characterised in that** the bypass opening (25) is located in the area of an undercut (24).

4. Coupling head (1) according to claim 3, **characterised in that** the undercut (24) is built with a gasket (14).

5. Coupling head (1) according to claim 3 or 4, **characterised in that** the undercut (24) is built with a housing (2).

6. Coupling head (1) according to one of the preceding claims, **characterised in that** the bypass (51) is formed with a bypass channel (26) or several bypass channels (26) and/or a bypass opening (25) or several bypass openings (25).

7. Coupling head (1) according to claim 6, **characterised in that** bypass channels (26) and/or bypass openings (25) are spread over the circumference.

8. Coupling head (1) according to claim 6, **characterised in that** the bypass channel (26) and/or the bypass opening (25) extends along the whole circumference.

9. Coupling head (1) according to claim 8, **characterised in that** the bypass channel (26) extending along the whole circumference is limited on the radially inner side by the filter element (12) and/or on the radially outer side by a gasket (14) and/or a housing (2).

10. Coupling head (1) according to one of the preceding claims 6 to 9, **characterised in that** in the area of a separating element a stream of pressurised air into the at least one bypass channel (26) is separated from a stream of pressurised air towards the filter element (12).

11. Coupling head (1) according to claim 10, **characterised in that** the separating element is built by a rim or edge (12) of the filter element (12).

12. Coupling head (1) according to one of the preceding claims, **characterised in that** the flow conditions are set in such a way that pressurised air from a stream in the guiding direction (22) via a deflection area (31), a turnaround area (30) and a counter-deflection area (33) passes through the bypass (51) if the filter element (12) is at least partially clogged.

13. Coupling head (1) according to one of the preceding claims, **characterised in that** the pressurised air passes through the bypass (51) with an S-shaped stream if the filter element (12) is at least partially clogged.

14. Coupling head (1) according to one of the preceding claims, **characterised in that** pressurised air passing through the bypass (51) passes around a protrusion, an edge or an appendage (36) which extends into the filter element (12).

15. Coupling head (1) according to one of the preceding claims, **characterised in that** an elastic guiding or passing element (41) is provided, which is elastically deformed by the stream of pressurised air.

16. Coupling head (1) according to claim 15, **characterised in that** the required deflection of the pressurised air on the way to the bypass opening (25) of the bypass (51) is dependent on the elastic deformation of the guiding or passing element (41).

17. Coupling head (1) according to claim 15 or 16, **characterised in that** the guiding or passing element (41) is formed with elastic segments of a circle (42) or segments of a circular ring (45).

18. Coupling head (1) according to one of claims 15 to 17, **characterised in that** the guiding or passing element (41) is built as an integral part of a or the gasket (14).

19. Coupling head (1) according to one of the preceding claims, **characterised in that** a or the gasket (14) is built according to ISO 1728 for coupling heads.

20. Coupling head (1) according to one of the preceding claims, **characterised in that** the filter element (12)
a) is fixed in position by the or a gasket (14) and
b) when the gasket (14) is disassembled can be removed from the coupling head (1) without further disassembling steps.

21. Coupling head (1) according to one of the preceding claims, **characterised in that** a collecting chamber for pollutants of the pressurised air is provided.

## Revendications

1. Tête d'attelage (1) pour un véhicule utilitaire avec un élément filtrant (12) traversé par de l'air comprimé et un bypass (51) ouvert en permanence et contournant l'élément filtrant (12).

2. Tête d'attelage (1) selon la revendication 1, **caractérisée en ce qu'**une surface de guidage (18) guide l'air comprimé dans une direction de guidage (22) en direction de l'élément filtrant (12) et le bypass (51) possède une ouverture de bypass (25) disposée de façon à ce que l'air comprimé ne puisse parvenir de la surface de guidage (18) vers l'ouverture de bypass (25) qu'avec une déviation de la direction de guidage (22).

3. Tête d'attelage (1) selon la revendication 2, **caractérisée en ce que** l'ouverture de bypass (25) est disposée au niveau d'une contre-dépouille (24).

4. Tête d'attelage (1) selon la revendication 3, **caractérisée en ce que** la contre-dépouille (24) est conçue avec un joint d'étanchéité (14).

5. Tête d'attelage (1) selon la revendication 3 ou 4, **caractérisée en ce que** la contre-dépouille (24) est conçue avec un boîtier (2).

6. Tête d'attelage (1) selon l'une des revendications précédentes, **caractérisée en ce que** le bypass (51) est formé avec un canal de bypass (26) ou de plusieurs canaux de bypass (26) et/ou une ouverture de bypass (25) ou de plusieurs ouvertures de bypass (25).

7. Tête d'attelage (1) selon la revendication 6, **caractérisée en ce que** les canaux de bypass (26) et/ou les ouvertures de bypass (25) sont répartis sur la circonférence.

8. Tête d'attelage (1) selon la revendication 6, **caractérisée en ce que** le canal de bypass (26) et/ou l'ouverture de bypass (25) est conçu(e) de manière circulaire sur la circonférence.

9. Tête d'attelage (1) selon la revendication 8, **caractérisée en ce que** le canal de bypass (26) circulaire est délimité de la manière radiale interne par l'élément filtrant (12) et/ou radiale externe par un joint d'étanchéité (14) et/ou un boîtier (2).

10. Tête d'attelage (1) selon l'une des revendications précédentes 6 à 9, **caractérisée en ce que**, au niveau d'un élément de séparation, un écoulement de l'air comprimé vers l'au moins un canal de bypass (26) est séparé d'un écoulement d'air comprimé en direction de l'élément filtrant (12).

11. Tête d'attelage (1) selon la revendication 10, **caractérisée en ce que** l'élément de séparation est formé par un bord (12) de l'élément filtrant (12).

12. Tête d'attelage (1) selon l'une des revendications précédentes, **caractérisée en ce que**, pour un élément filtrant (12) au moins partiellement obstrué, les conditions d'écoulement sont prédéterminées de façon à ce que l'air comprimé d'un écoulement dans la direction de guidage (22) traverse le bypass (51) en passant une zone de dérivation (31), une zone de retournement (30) et une zone de contre-dérivation (33).

13. Tête d'attelage (1) selon l'une des revendications précédentes, **caractérisée en ce que** l'air comprimé traverse le bypass (51) pour un élément filtrant (12) au moins partiellement obstrué avec un écoulement en forme de S.

14. Tête d'attelage (1) selon l'une des revendications précédentes, **caractérisée en ce que** l'air comprimé traversant le bypass (51) s'écoule autour d'une saillie, d'une arête ou d'un épaulement (36), qui s'étend dans l'élément filtrant (12).

15. Tête d'attelage (1) selon l'une des revendications précédentes, **caractérisée en ce qu'**un élément de guidage ou de passage élastique (41) est prévu, qui est déformé par l'écoulement de l'air comprimé.

16. Tête d'attelage (1) selon la revendication 15, **caractérisée en ce que** la dérivation nécessaire de l'air comprimé sur le trajet vers l'ouverture (25) du bypass (51) dépend de la déformation élastique de l'élément de guidage ou de passage (41).

17. Tête d'attelage (1) selon la revendication 15 ou 16, **caractérisée en ce que** l'élément de guidage ou de passage (41) est muni de segments circulaires (42) ou de segments annulaires (45) élastiques.

18. Tête d'attelage (1) selon l'une des revendications 15 à 17, **caractérisée en ce que** l'élément de guidage ou de passage (41) est conçu comme faisant partie intégrante d'un ou du joint d'étanchéité (14).

19. Tête d'attelage (1) selon l'une des revendications précédentes, **caractérisée en ce qu'**une ou le joint d'étanchéité (14) est conçu selon la norme ISO 1728 pour les têtes d'attelage.

20. Tête d'attelage (1) selon l'une des revendications précédentes, **caractérisée en ce que** l'élément filtrant (12) :
a) est maintenu en position par le ou un joint d'étanchéité (14) et
b) peut être extrait de la tête d'attelage (1), sans étapes de démontage supplémentaires, lorsque le joint d'étanchéité (14) est démonté.

21. Tête d'attelage (1) selon l'une des revendications précédentes, **caractérisée en ce qu'**un espace de collecte des impuretés de l'air comprimé est prévu.
